# EUROPÄISCHE PATENTSCHRIFT

(11) **EP 0 953 370 B1**
(45) Veröffentlichungstag und Bekanntmachung des Hinweises auf die Patenterteilung: **27.03.2002**
(21) Anmeldenummer: 99107815.5
(22) Anmeldetag: 20.04.1999
(51) Int. Cl.: B01D 21/24

(54) **Verfahren zum Betrieb eines Sedimentationsbeckens mit rechteckigem Grundriss zum Abscheiden von Schlamm aus Abwasser**
Method of operating a sedimentation basin having rectangular base for separating sludge from waste water
Procédé d'opérer un bassin de sédimentation à fond rectangulaire des boues des eaux usées

(30) Priorität: 27.04.1998 DE 19818539
(43) Veröffentlichungstag der Anmeldung: 03.11.1999
(73) Patentinhaber: Emschergenossenschaft Lippeverband, 45128 Essen (DE); Bever, Jürgen, Dr., 47546 Kalkar-Niedermörmter (DE); Holthausen, Erich, 51469 Bergisch Gladbach (DE)
(72) Erfinder: Schlegel, Sigurd, Dr., 47441 Moers (DE); Stein, Andreas, Dr., 49249 Dülmen (DE)
(74) Vertreter: Kaewert, Klaus

(56) Entgegenhaltungen:
- DE-A- 19 649 814
- GB-A- 2 101 494
- US-A- 2 118 157
- US-A- 2 149 751
- US-A- 5 620 600

## Beschreibung

Die Erfindung betrifft ein ein Verfahren nach Anspruch 1 zum Betrieb eines Sedimentationsbeckens mit rechteckigem Grundriß zum Abscheiden von Schlamm aus Abwasser, mit einem Zulauf für das Gemisch aus Schlamm und Abwasser in das Sedimentationsbecken, einer an der Sohle des Sedimentationsbeckens entlangstreichend angetriebenen Räumeinrichtung für den abgesetzten Schlamm, einer Abzugseinrichtung für den Schlamm und einem Ablauf für das Klarwasser. Derartige Sedimentationsbecken werden insbesondere im Bereich der Klärtechnik eingesetzt. Sie können als Nachklärbecken, Grobentschlammungsbecken oder dergleichen Verwendung finden. Solche Sedimentationsbecken werden dem Gemisch aus Schlamm und Abwasser bei relativ geringer Geschwindigkeit durchflossen, wobei es das Ziel ist, daß sich der Schlamm durch Schwerkrafteinwirkung an der Sohle des Sedimentationsbeckens absetzt.

Sedimentationsbecken der eingangs beschriebenen Art sind bekannt. Es handelt sich um Rechteckbecken, bei denen im Bereich der einen Stirnseite das Gemisch aus Schlamm und Abwasser in das Becken eingeführt wird. In dem Sedimentationsbecken ist eine Räumeinrichtung häufig in Form eines Schildräumers, Saugräumers oder Bandräumers untergebracht. Der Bandräumer hat Vorteile gegenüber den anderen Räumern aufgezeigt. Ein solcher Bandräumer weist in den Seitenbereichen je eine Kette auf, die in der Regel über vier Umlenkrollen geführt wird. Die beiden Ketten sind über Räumschilde miteinander verbunden, die sich im wesentlichen über die Breite des Beckens erstrecken. Die Räumeinrichtung wird so angetrieben, daß die Räumschilde an der Sohle des Sedimentationsbecken entlangstreichen und den dort abgesetzten Schlamm mitnehmen. Die Antriebsrichtung der Räumeinrichtung ist derart, daß sich der untere Trum, also der Trum, der die Förderarbeit für den Schlamm erbringt, entgegen der Durchflußrichtung des Gemisches aus Schlamm und Abwasser bewegt. Das Becken weist in der Beckensohle im Bereich des Zulaufes einen Trichter auf, in den der von der Räumeinrichtung geförderte Schlamm gefördert wird, wobei er in dem Trichter zusätzlich absinkt. Es ist eine Abzugseinrichtung für den Schlamm vorgesehen, mit welcher in Förderphasen der Schlamm aus dem Trichter herausgefördert wird. Der Abzug des Klarwassers erfolgt seitlich oder an der dem Zulauf gegenüberliegenden Seite mit Hilfe von Tauchrohren oder Rinnen. Derartige Anlagen sind z.B. in der Druckschrift "Hans Huber GmbH, Rechteckbeckenausrüstung PGB, Ausgabe 6.1994" gezeigt. Dabei ist die Strömungsrichtung des Abwassers und die Bewegungsrichtung des Bandräumers im Bereich der Sohle entgegengesetzt gerichtet, so daß sich eine entsprechende Verwirbelung nicht vermeiden läßt

Die Firmenschrift der Hans Huber GmbH "Rechteckbeckenanordnung", 6/94 beschreibt Rechteckbeckenausrüstungen, bestehend aus Coanda-Feeder, Bandräumer und Tauchrohren, wobei die Strömungsrichtung des Abwassers und die Bewegungsrichtung des Bandräumers im Bereich der Sohle jedoch entgegengesetzt gerichtet sind. Das bewirkt äußerst nachteilige Strömungsverhältnisse.

Aus der DE 44 07343 C2 ist eine Vorrichtung zum Abscheiden von festen Partikeln aus einer Flüssigkeit bekannt. Am Boden des Sinkbehälters ist das Abzugstrum einer Abzugseinheit für Schlamm aus einem endlosen Stahlseil mit im Abstand am Stahlseil festgelegten scheibenförmigen Mitnehmer vorgesehen. Die Flüssigkeit wird mit den Partikeln oben in den Behälter aufgegeben, das Flüssigkeitsniveau mit einem Schwimmschalter kontrolliert. Der Vorgang hat Ähnlichkeit mit einem sogenannten Batch-Betrieb. Ein Hochleistungsbetrieb ist damit nicht erreichbar, wie er z.B. in einer Kläranlage notwendig ist.

Aus der DE 1759079 B2 ist ein Sedimentationsbecken mit rechteckigem Grundriß zum Abscheiden von Schlamm aus Abwasser mit einer an der Sohle des Beckens entlangstreichend bewegten Räumeinrichtung für den abgesetzten Schlamm bekannt. Dabei wird in beiden Längsrichtung, also hin- und hergehend, geräumt. Das bedingt zwangsläufig eine Bewegung entgegen der Abwasserströmungsrichtung und kann bei höheren Abwasserströmgeschwindigkeiten/Räumgeschwindigkeiten keine guten Ergebnisse zeigen.

Die DE 4407343 A1 zeigt eine Vorrichtung zum Abscheiden von Partikeln mit fester Konsistenz aus einer Flüssigkeit, welche einen sich nach unten V-förmig verengenden Sinkbehälter mit einer bodenseitigen Abzugseinheit für die mit der Flüssigkeit benetzten Partikel aufweist. In dem Sinkbehälter sind Lamellen in schräger Anordnung vorgesehen, zwischen denen die Partikel absinken. Die Lamellen verhindern gleichzeitig eine Flüssigkeitsströmung in ihrem Bereich in Richtung der Bewegung der bodenseitigen Abzugseinheit. Zudem ist die Schräganordnung der Lamellen noch so gerichtet, daß die absinkenden Partikel eine Bewegungskomponente erhalten, die der Bewegungsrichtung der Abzugseinheit entgegengerichtet ist. Die Abzugseinrichtung ist so angetrieben, daß die infolge Schwerkraft abgesetzten Partikel mit einer Geschwindigkeit mitgenommen werden, die sich erheblich von der Durchströmgeschwindigkeit des Abwassers durch das Becken unterscheidet, weil die beiden Richtungen entgegengesetzt gerichtet sind.

Die DE 3629947 C2 zeigt eine Vorrichtung zur kontinuierlichen Abtrennung von Feststoffteilchen aus einer flüssigen Suspension. In einem Becken werden unterschiedliche Trennzonen gebildet, wobei einer ersten Trennzone eine schräg ansteigende Beckensohle zugeordnet ist, während einer zweiten Trennzone, in der Lamellen vorgesehen sind, die Sohle des Beckens horizontal verläuft. Über beide Trennzonen wird ein endloses Schaberförderband, welches mit Mitnehmern besetzt ist, geführt, wobei das obere Trum dieses Bandes parallel und benachbart zu dem unteren Trum angeordnet ist. Demzufolge tritt zwangsläufig eine Verwirbelung durch die hier aufgebrachten unterschiedlich gerichteten Geschwindigkeiten auf. Die Flüssigkeit wird mit einer Rohrleitung und einem zwischen den beiden Trennzonen angeordneten Verteiler aufgebracht und in einer Art kreisartigen Walzenbewegung durch die beiden Trennzonen hindurch geführt. Die Förderrichtung des unteren Trums des Förderbandes ist der Fließgeschwindigkeit der Flüssigkeit in weiten Bereichen entgegengerichtet, so daß eine entsprechende Verwirbelung stattfinden muß.

Die DE 27 22 063 A1 zeigt eine Einrichtung zur Behandlung von Abwässern vor Eintritt in die biologische Reinigung. In dem Behälter sind zwei in sich geschlossene Kettensysteme angeordnet. Die Ketten sind mit Abstreifern versehen, wobei die Abstreifer der einen Kette die auf den Boden abgesunkenen Stoffe und die Mitnehmer der anderen Kette die an der Wasseroberfläche schwimmenden Stoffe zum Austrag transportieren. Die Strömungsverhältnisse in dem Behälter sind so gestaltet, daß eine im Behälter auftretende Turbulenz für die Zerkleinerung der Fäkalien genutzt wird. Wenn die Turbulenz zu klein wird, wird der Abzug geschlossen, wodurch die festen Partikel erneut im Behälter umgewälzt werden.

Die EP 0198334 A2 zeigt eine Wasserreinigungs- und Abwasserbehandlungsvorrichtung, die einen Bandräumer aufweist, der sowohl zum Räumen des Sinkschlammes als auch zum Fördern des Schwimmschlammes geeignet ist. Der Bandräumer übt mit seinen Ketten und seinem Antrieb eine entsprechende Verwirbelung auf die Flüssigkeit aus, so daß das Absinken des Schlammes behindert wird.

In solchen Sedimentationsbecken herrschen Verhältnisse mit unterschiedlichen Turbulenzgraden. Diese Turbulenzen können die verschiedensten Ursachen haben, beispielsweise durch die Bewegung der angetriebenen Räumeinrichtung verursacht sein oder auch durch den periodischen Betrieb der Abzugseinrichtung für den Schlamm ausgelöst werden und dergleichen. Diese unvermeidlich auftretenden Turbulenzen müssen bei der Auslegung des Sedimentationsbeckens berücksichtigt sein, weshalb man davon ausgeht, daß die nutzbare Höhe solcher Becken größer als drei Meter sein muß (vgl. ATV-A 131, S. 14). Je nach Art des abzusetzendes Schlammes und den übrigen Bedingungen wird sich in dem Sedimentationsbecken eine Schichtung ergeben, wobei die unterste Schicht als Eindick- oder Räumzone angesprochen werden kann. Oberhalb der Räumzone bildet sich eine Filterzone, gefolgt von einer Speicherzone im Mittelbereich und einer Klarwasserzone im Anschluß an den Wasserspiegel im Sedimentationsbecken. Es versteht sich, daß diese Zonen nicht exakt räumlich voneinander getrennt sind, sondern daß Übergangsbereiche vorhanden sind und auch die einzelnen Schichtdicken unterschiedlich groß anwachsen können, je nach Konzentration sowie nach anderen Parametern des Schlammes im Abwasser. Die Höhe bzw. Tiefe des rechteckigen Sedimentationsbeckens, die durch den Trichter für den Schlammabzug noch vergrößert wird, stellt einen gewichtigen Nachteil dar. Es kann durchaus vorkommen, daß die Sohle des Beckens unterhalb des Grundwasserspiegels platziert werden muß, so daß hier zusätzliche Bau- und Konstruktionsmaßnahmen erforderlich werden. Andererseits lassen sich die verschiedenen Zonen in ihrer jeweiligen Höhe nicht willkürlich verkleinern, und der Größe, insbesondere Länge, des Sedimentationsbeckens sind auch Grenzen gesetzt.

Die US-A-2118157 kann den vorstehend geschilderten Problemen auch nicht abhelfen. Diese Druckschrift zeigt einen sich über die gesamte Beckenhöhe erstreckenden Einlauf. Dahinter steht ein Konzept aus 1934, die gesamte Beckenhöhe als Trennzone für die Trennung der Feststoffe aus dem Abwasser zu nutzen. Die oben beschriebenen Zonen werden weitgehend ignoriert. Außerdem ist hier keine Räumvorrichtung vorgesehen. Der Schlamm soll sich auf einem Transportband ablegen, das den Schlamm einem Schlammabzug am Beckenende zuführt. Das Transportband ist bedenklich, weil es neben einem in Strömungsrichtung laufenden Obertrum ein entgegen der Strömungsrichtung laufendes Untertrum besitzt.

Nach dem älteren Vorschlag der deutschen Patentanmeldung DE-A-19649814 soll deshalb ein Sedimentationsbecken der eingangs beschriebenen Art geschaffen werden, welches bei hinreichender Abscheidewirkung eine vergleichsweise kleinere Höhe bzw. Tiefe aufweist.

Nach dem genannten älteren Vorschlag wird dies bei dem Sedimentationsbecken der eingangs beschriebenen Art dadurch erreicht, daß die Abzugseinrichtung für den Schlamm an der dem Zulauf gegenüberliegenden Seite des Sedimentationsbeckens vorgesehen ist, und daß die Räumeinrichtung so angetrieben ist, daß der Schlamm in der Durchströmrichtung des Abwassers durch das Sedimentationsbecken mit einer Geschwindigkeit gefördert wird, die zumindest in etwa der Durchströmgeschwindigkeit des Abwassers unmittelbar über der Räumeinrichtung entspricht.

Der genannte ältere Vorschlag geht von dem Gedanken aus, die Strömung in dem Sedimentationsbecken in Durchströmrichtung zu vergleichmäßigen, wobei durch die Veränderung der Lage der Abzugseinrichtung für den Schlamm die Strömung in dem Sedimentationsbecken durch Verringerung der Geschwindigkeitsgradienten oberhalb des Räumers abgebaut werden und damit die Ursachen für auftretende Turbulenzen beseitigt oder doch zumindest stark vermindert sind. Für die eindeutige Vorgabe der Durchströmrichtung ist es wichtig, daß der Zulauf im Bereich der einen Stirnseite des Sedimentationsbeckens und die Abzugseinrichtung für den Schlamm an der anderen Stirnseite des Sedimentationsbeckens angeordnet ist. Dadurch wird erreicht, daß sich der Schlamm ebenfalls in Durchströmrichtung bewegen muß, und es ergibt sich die Möglichkeit, die Räumeinrichtung auch in dieser Durchströmrichtung mit ihrem unteren Trum anzutreiben. Der Antrieb der Räumeinrichtung geschieht jedoch nicht irgendwie, sondern so, daß nach Möglichkeit größere Relativbewegungen und Geschwindigkeitsdifferenzen zwischen Abwasser und Räumeinrichtung vermieden werden. Freilich wird sich auch in einem solchen Sedimentationsbecken ein Geschwindigkeitsprofil über die Höhe und über den Querschnitt des Beckens ausbilden. Bedenkt man zusätzlich, daß die an der Räumeinrichtung vorgesehenen Räumschilde eine entsprechende Ausdehnung in Höhenrichtung aufweisen und nur mit gleicher Geschwindigkeit bewegt werden können, dann lassen sich an allen Punkten der Räumeinrichtung Differenzgeschwindigkeiten zu der Geschwindigkeit des strömenden Abwassers nicht vermeiden. Es ist aber möglich, diese Differenzgeschwindigkeiten relativ klein zu gestalten. Bei Einhaltung dieser Maßnahrnen wird es bei einem bestimmten Anwendungsfall überraschenderweise möglich, die Höhe eines Rechteckbeckens bei gleicher Sedimentationsleistung in eine Größenordnung von etwa zwei Metern zu erniedrigen. Während im Stand der Technik für diesen Anwendungsfall Höhen von drei Metern und mehr nicht vermeidbar erschienen und die Entwicklung solcher Becken in Richtung Vergrößerung der Höhe bzw. Tiefe gerichtet war, schlägt die vorliegende Entwicklung eine gegensätzliche Richtung ein. Dies gilt für andere Anwendungsfälle entsprechend. Dies bedeutet weiterhin, daß die Höhen der einzeln eingeschichteten Zonen, sofern überhaupt vorhanden, vergleichsweise verringert werden. Dies wird jedoch möglich infolge der Verringerung bzw. Vermeidung der bisher unvermeidlichen Turbulenzen.

Freilich ist auch hier die Höhe der Zone vom Durchsatz und von der Schlammvolumenbeschickung abhängig. Das neue Sedimentationsbecken schafft optimale Bedingungen für die Sedimentation durch kleine Geschwindigkeitsgradienten an den entscheidenden Stellen im Sedimentationsbecken.

Im Stand der Technik gibt es zwar auch Bemühungen zur Beeinflussung der Flüssigkeitsströmung. Keine der relevanten Druckschriften zeigt jedoch ein dem älteren Vorschlag vergleichbares Sedimentationsbecken.

Die Sohle des Sedimentationsbeckens kann durchgehend flach ausgebildet sein. Damit werden vorteilhafte Trichter, die an sich in nachteiliger Weise die Höhe des Sedimentationsbeckens vergrößern würden, vermieden. Hierdurch wird auch der Querschnitt des Beckens einfacher, und die Baukosten erniedrigen sich. Das Sedimentationsbecken kann aber auch einen kleinen Trichter aufweisen, der die Höhe bzw. Tiefe nicht allzusehr vergrößert und auf der dem Zulauf abgekehrten Seite vorgesehen ist. Die Sohle des Beckens kann sich mit geringem Gefälle in Durchströmrichtung erstrecken, und zwar mit und ohne gleichzeitige Anwendung eines kleinen Trichters.

In Verbindung mit den vorstehenden Merkmalen ist es von Bedeutung, daß die Unterkante des Zulaufs etwa in Höhe der Sohle des Sedimentationsbeckens angeordnet ist. Diese Anordnung zielt auf einen Bereich ab, in dem normalerweise die Eindick- oder Räumzone vorhanden ist. Der Zulauf ist damit vergleichsweise tiefer angeordnet als im Stand der Technik. Auch kann der Zulauf nur geringfügig oberhalb der Oberkante der Räumschilde der Räumeinrichtung vorgesehen sein. Eine intensivierte Sedimentationswirkung ist die Folge. Der Zulauf muß aber nicht unbedingt in Höhe der Sohle des Beckens erfolgen, jedoch sollte eine möglichst tiefe Anordnung angestrebt werden. Dadurch wird eine nach unten gerichtete Strömung im Bereich des Zulaufes vermieden. Eine Trennzone bildet sich nicht aus, so daß sich auch hierdurch die Tiefe des Beckens vorteilhaft verringert.

Der Zulauf für das Gemisch aus Schlamm und Abwasser kann sich im wesentlichen über die Breite des Sedimentationsbeckens erstrecken. Dies ist wichtig zur Vermeidung örtlich größerer Einströmgeschwindigkeiten. Gleichfalls ist diese Maßnahme von Bedeutung für eine Verteilung des Zulaufs über die Breite des Beckens. In diesem Zusammenhang ist es durchaus sinnvoll und nützlich, Einströmbedingungen unter Verwendung beispielsweise entsprechend gebogener Leitbleche vorzusehen, mit deren Hilfe Einfluß auf die Strömungsumlenkung des sich über die Breite des Beckens erstreckenden Zulaufes genommen wird. Es versteht sich, daß der Zulauf in ein solches Sedimentationsbecken mit einem Minimum an kinetischer und potentieller Energie zu erfolgen hat, auch deshalb, um an dieser Stelle Turbulenzen zu vermeiden. Im Stand der Technik befindet sich der Schlammabzug im Bereich der Stirnwand, in der auch der Zulauf vorgesehen ist. Dabei muß je nach Schlammanfall mehr oder weniger Schlamm über die Räumeinrichtung zurückgefördert, also entgegen der Durchströmrichtung gefördert werden. Die Strömung schichtet sich entsprechend der Dichteverhältnisse ein. Es ergeben sich zwei unterschiedliche Strömungs- bzw. Fließrichtungen, so daß der Zulauf durch den Rücklauf des Schlamms vergleichsweise angehoben wird, und zwar aus Gründen unterschiedlicher Dichte. Dies stört auch die Ausbildung der Speicherzone im Stand der Technik, während deren Bildung beim Anmeldungsgegenstand begünstigt ist und für die Anordnung des Zulaufes genutzt wird. Bei der Lösung nach dem älteren Vorschlag steigt die Konzentration mit zunehmender Eindickung in Durchströmrichtung an. Turbulenzen werden verhindert, da eine Gegenströmrichtung nicht vorhanden ist. Hieraus folgt ein optimales Absetzen des Schlammes mit zunehmender Eindickung in Durchströmrichtung. Da die Richtung der Räumeinrichtung und die Richtung der Strömung beide in Durchströmrichtung gerichtet, also gleichgerichtet sind, können sich - wenn überhaupt - nur vergleichsweise kleine Geschwindigkeitsgradienten ausbilden, die nur geringe Turbulenzen erzeugen.

Auch die Abzugseinrichtung für den Schlamm sollte sich im wesentlichen gleichmäßig über die Breite des Sedimentationsbeckens erstrecken. Damit werden örtliche Geschwindigkeitserhöhungen auch an dieser Stelle vermieden. Es besteht sogar die Möglichkeit, auch im Bereich der Abzugseinrichtung etwa übereinstimmende Geschwindigkeiten zwischen Schlamm und Abwasser zu wählen, um auch an dieser Stelle Turbulenzen zu vermeiden.

Die Räumeinrichtung kann als Bandräumer ausgebildet sein. Solche Bandräumer bieten einen besonderen Vorteil, weil sie die Durchströmung des Sedimentationsbeckens vergleichsweise sehr wenig behindern. Sie sind im Mittelbereich weitgehend offen gestaltet. Nur die Räumschilde erstrecken sich über die Breite des Beckens. Aber selbst die Räumschilde sind auf relativ großem Abstand zueinander angebracht. Und besitzen im allgemeinen nur eine vergleichsweise geringe Höhe etwa in der Größenordnung bis 20 cm. Sinnvolle Räumergeschwindigkeiten liegen in der Größenordnung bis 20, vorzugsweise bei 1 bis 5 cm/s. Die Geschwindigkeit des Bandräumers wird an die Eindickfähigkeit des Schlamms angepaßt.

Die Abzugseinrichtung für den Schlamm kann als Saugheber ausgebildet sein, der mit Saugdüsen ausgestattet ist. Durch diese Ausbildung wird auch die Strömung bei der Saugabfuhr des Schlamms über die Breite des Sedimentationsbeckens vergleichmäßigt und auf diese Weise dem Entstehen von Turbulenzen entgegengewirkt.

Der obere Trum des Bandräumers kann zur Schwimmschlammräumung ausgebildet und angeordnet sein. Hier stört eine entgegengesetzt zur Durchströmrichtung gerichtete Bewegung vergleichsweise wenig. Es ist aber auch möglich, daß der obere Trum des Bandräumers oberhalb des Wasserpegels angeordnet ist, wenn eine Räumung des Schwimmschlamms nicht erforderlich erscheint oder die Abfuhr des Schwimmschlammes in anderer Weise realisiert werden kann. Auf jeden Fall ist es möglich, unterschiedlich gerichtete Geschwindigkeiten auch im Bereich des Wasserspiegels zu vermeiden, weil dort die Klarwasserzone vorhanden ist.

Als Ablauf für das Klarwasser können Überlaufrinnen vorgesehen sein, die seitlich oder quer zur Beckenlängsachse angeordnet sind. An sich ist die Anordnung des Ablaufes für das Klarwasser nicht besonders kritisch, d. h. es kommen hier mehrere Stellen an dem Sedimentationsbecken in Frage, insbesondere auch die Bereiche der Längsseiten des Sedimentationsbeckens. Die Abfuhr des Klarwassers kann einerseits über Tauchrohre, andererseits aber auch über Überlaufrinnen erfolgen, die entsprechend platziert sind. Die Verwendung von Tauchrohren kann die Tiefe des Beckens vergrößern, während dies bei Überlaufrinnen nicht der Fall ist. Ein etwa im Bereich des Zulaufes beginnender seitlicher Abzug des Klarwassers ist sinnvoll, weil dadurch eine Aufwärtsströmung im Bereich des Beckenendes vermieden wird. Außerdem wird so der zum Beckenende hin gerichtete Volumenstrom in Durchströmrichtung allmählich verringert. Dies führt zu einem weiter verbesserten Absetzen.
Die an der dem Zulauf gegenüberliegenden Seite des Sedimentationsbeckens vorgesehene Abzugseinrichtung für den Schlamm kann kontinuierlich oder intervallgesteuert angetrieben sein. Insbesondere eine kontinuierliche Betriebsweise bietet sich hier an, wobei es möglich ist, auch im Bereich der Abzugseinrichtung für den Schlamm identische Geschwindigkeiten wie in Nachbarbereichen des Abwassers vorzusehen, um auch an dieser Stelle dem Entstehen von Turbulenzen entgegenzuwirken.

Die Erfindung hat sich die Aufgabe gestellt, den älteren Vorschlag weiterzubilden. Das wird nach der Erfindung mit den Merkmalen der Ansprüche erreicht.

Im einzelnen werden noch wesentliche Wirkungen aus der Gleichrichtung der Strömungen erreicht, wenn das Wassergeschwindigkeit das O,5 bis 2fache der Räumergeschwindigkeit beträgt. Diese Angabe bezieht sich auf die Wassergeschwindigkeit über der Schlammschicht in einem für die gesamten Verhältnisse des Beckens repräsentativen Bereich. Als Bezugsgröße ist der Beckenfang an der Einleitungsstelle gewählt. Mit Beckenanfang sind die ersten 20% der Beckenlänge vorzugsweise die ersten 10% der Beckenlänge bezeichnet.

Alternativ oder zusätzlich wird eine Trennzone am Wassereintritt erzeugt, in der durch turbulente Strömung eine Agglomeration der Mikropartikel zu Makroflocken entsteht, so daß die Makroflocken in die Eindickschicht überführt werden und das von Feststoffen befreite Wasser nach oben austritt.
Die Erfindung nutzt das Verfahren aus, indem das Abwasser in Höhe der Eindick- und Räumschicht über bzw. an der Beckensohle eingeleitet wird. Dabei bildet sich die gewünschte Trennzone über der Beckensohle aus. Hiermit wird zwar die zur Verfügung stehende Fläche der Eindick- und Räumschicht etwas verringert, gleichwohl ist kein verringerter Wirkungsgrad zu befürchten. Vielmehr entsteht eine viel höhere Trennleistung . Die Grenzschicht der Trennzone verläuft bei ausreichend hohem Feststoffgehalt im Strömungsquerschnitt (Schnitt in Beckenlängsrichtung) gesehen etwa auf zwei Viertelkreisen, von denen der erste an dem Abwassereintritt, vorzugsweise horizontal beginnt und vertikal in den zweiten Viertelkreis übergeht, der sich an den ersten Viertelkreis so anschließt, daß beide Viertelkreise etwa eine S-Form bilden. In radialer Richtung erstreckt sich die S-Form bei den derzeit vorkommenden Beckenabmessungen auf eine Länge bis 3 m, zumeist auf eine deutlich kürzere Länge.

Die Grenzschicht kennzeichnet den Weg der in die Eindick- und Räumschicht strömenden Makroflocken. Im vorderen Bereich findet die Bildung der Makroflocken statt, im hinteren Bereich findet die Trennung des Schlammes von Klarwasser statt.

Die Erfindung löst sich in der zweiten Alternative zur Steigerung der Absetzleistung von der Vorstellung, daß das Abwasser möglichst langsam in die Klärbecken einströmen müsse, um das Absinken der Feststoffe zu erleichtern. Im Gegenteil sucht die Erfindung eine Mindestturbulenz, um einen Kontakt der Mikroflocken herbeizuführen.

Außerhalb der Trennzone ist die Erfindung nach der zweiten Alternative wie auch andere Lösungen um eine möglichst gering turbulente Strömung bemüht.

Die überraschende Erhöhung der Trennleistung durch die erfindungsgemäße Anordnung der Trennzone kann in verschiedener Hinsicht genutzt werden. Z.B. können vorhandene Becken mit höherer Leistung gefahren werden. Neue Becken können mit geringerer Tiefe gebaut werden. D.h. mit kleineremVolumen gleiche Trennleistung bringen.

Der Abwasserzulauf erfolgt primär an der Beckensohle. Gegenüber dem herkömmlichen Abwasserzulauf ist die erfindungsgemäße Anordnung des Abwasserzulaufes deutlich niedriger. Das Abwasser wird damit in Höhe der Eindick- und Räumschicht turbulent eingespeist. Im Unterschied zu herkömmlichen Becken wird durch diese Anordnung des Abwasserzulaufes eine nach unten gerichtete Strömung vermieden. Das trägt erheblich zu den erfindungsgemäßen Vorteilen bei.

Es liegt im Rahmen der Erfindung, wenn der Abwasserzulauf nicht unmittelbar an der Beckensohle, sondern innerhalb der Eindick- und Räumschicht angeordnet ist.

Das Abwasser wird vorzugsweise so aufgegeben, daß es sich möglichst in Beckenlängsrichtung und gleichmäßig in die Eindick- und Räumschicht verteilt. Dabei wird das Abwasser vom Beckenrand aus eingespeist.

Zur Einspeisung kann ein quer zur Beckenlängsrichtung verlaufender Spalt eingebaut werden. Wahlweise treten an die Stelle des Spaltes oder auch zusätzlich Schlitze. Die Schlitze können gleichförmig und ungleichförmig über die Beckenbreite verteilt sein.

Der Spalt kann eine Höhe bis 50 cm aufweisen, vorzugsweise bis 20 cm.

Die Strömungsgeschwindigkeit innerhalb des Beckens soll ein bestimmtes Maß nicht überschreiten bzw. nicht unterschreiten. Ausgangsmaß der Strömungsgeschwindigkeit ist der Abwasserzulauf im Spalt bzw. in den Schlitzen. In dem Abwasserzulauf soll die Geschwindigkeit ein Maß von 20 cm pro Sekunde nicht überschreiten. Vorzugsweise liegt die Strömungsgeschwindigkeit zwischen 5 und 10 cm pro Sekunde,

Die Beckensohle kann eben oder auch in Richtung der Schlammbewegung geneigt sein. Die Neigung beträgt maximal 20 Grad zur Horizontalen.

Der Antrieb der Räumeinrichtung erfolgt so, daß sich die Räumeinrichtung möglichst langsam durch das Becken bewegt und nur vernachlässigbare Turbulenzen verursacht. Die Räumergeschwindigkeit beträgt vorzugsweise maximal 10 cm pro Sekunde. Günstigere Verhältnisse ergeben sich bei einer auf maximal 5 cm pro Sekunde beschränkten Geschwindigkeit.

Die Räumschildhöhe wird auf die zu transportierende Schlamm-Menge und dieBeckenabmessungen abgestimmt. Vorzugsweise beträgt die Höhe 10 bis 50 cm.

Vorteilhafterweise wird die Turbulenz außerhalb der Trennzone im Becken extrem reduziert. Das kann genutzt werden, um bei gleichen Beckenabmessungen die Trennleistung des Beckens noch weiter zu steigern. Alternativ kann das genutzt werden, um z.b. die Tiefe des Beckens weiter zu reduzieren. Eine Reduktion der Tiefe von z.B. üblichen 3m auf neue 2m ist mit der Erfindung ohne weiteres möglich.

Die Erfindung wird anhand bevorzugter Ausführungsbeispiele weiter erläutert und beschrieben. Es zeigen:
- Fig. 1: einen Längsschnitt durch eine erste Ausführungsform des Sedimentationsbeckens und
- Fig. 2: einen Längsschnitt durch eine zweite Ausführungsform des Sedimentationsbeckens.
- Fig. 3: eine schematische Ansicht der Trennzone

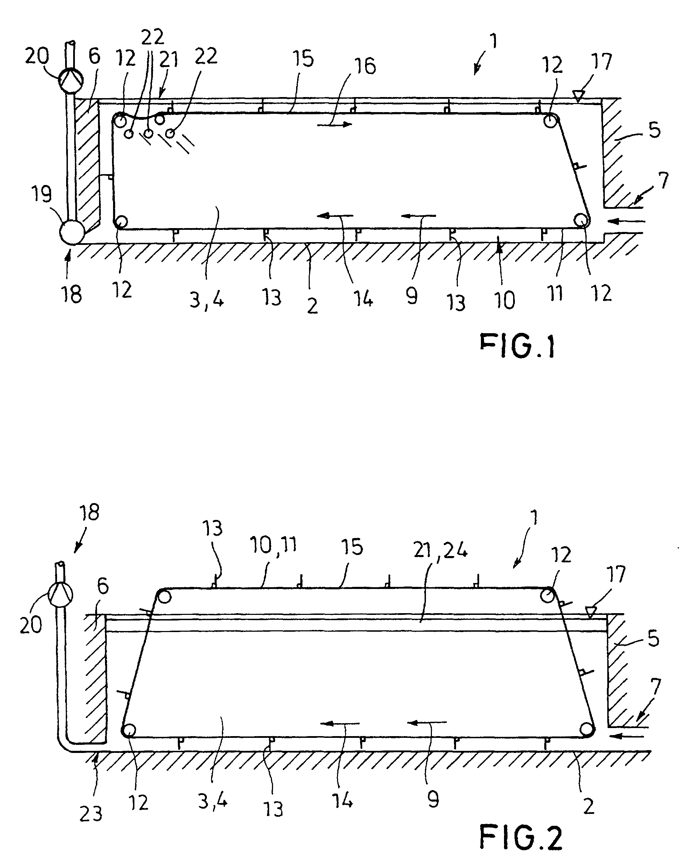

In Fig. 1 ist das Sedimentationsbecken 1 beispielhaft verdeutlicht, wobei die Proportionen nicht unbedingt maßstabsgerecht angegeben sind. Das Sedimentationsbecken 1 weist eine Sohle 2, zwei Längswände 3 und 4 sowie zwei Stirnwände 5 und 6 auf. Die Sohle 2 ist durchgehend flach ausgebildet, d. h. es ist hier kein die Höhe des Sedimentationsbeckens vergrößernder Trichter im Bereich der Sohle 2 vorgesehen. Die Sohle 2 kann sich horizontal erstreckend vorgesehen sein, wie dargestellt. Es ist aber auch möglich, in Durchströmrichtung ein geringes Gefälle oder auch eine geringe Steigung zu verwirklichen. Die Längswände 3 und 4 können erheblich länger gestaltet sein als die Stirnwände 5 und 6. Das Sedimentationsbecken 1 kann eine Länge in der Größenordnung von 10 - 60 m und eine Breite in der Größenordnung von 3 - 10 m aufweisen. Die Höhe ist vorteilhaft niedrig, und zwar in der Größenordnung von 2 - 3 m. Im Bereich der Stirnwand 5 ist ein Zulauf 7 für das Gemisch von Schlamm und Abwasser in das Sedimentationsbecken 1 vorgesehen. Der Zulauf 7 sollte so tief wie möglich angeordnet sein. Er kann sich in einer Höhe oberhalb der Räumzone befinden, die sich von der Sohle 2 aus nach oben erstreckt. Oberhalb der Räumzone befindet sich die Speicherzone, darüber die Klarwasserzone. Das Gemisch aus Schlamm und Abwasser, welches über den Zulauf 7 in das Sedimentationsbecken 1 eingebracht wird, bewegt sich von der Stirnwand 5 in Richtung auf die Stirnwand 6, also in Durchströmrichtung 9, die durch einen Pfeil verdeutlicht ist. In dem Sedimentationsbecken 1 befindet sich eine Räumeinrichtung 10, die insbesondere als Bandräumer 11 ausgebildet ist. Ein solcher Bandräumer weist in der Regel im Seitenbereich, also benachbart zu den Längswänden 3 und 4, je eine Kette auf, die über Umlenkrollen geführt ist. Zwischen den beiden Ketten befinden sich Räumschilde 13, die im wesentlichen über die Breite des Sedimentationsbeckens 1 durchgehend vorgesehen sind und an der Sohle 2 entlangstreichend ausgeführt werden, wobei die Förderrichtung des Bandräumers 11 durch einen Pfeil 14 verdeutlicht ist. Pfeil 14 und der die Durchströmrichtung 9 wiedergebende Pfeil sind also gleichgerichtet und auch im Betrag etwa gleich groß gestaltet, um auf jeden Fall Relativgeschwindigkeiten an dieser Stelle zu vermeiden und der Ursache für die Ausbildung von Turbulenzen oder entsprechende Strömungen entgegenzuwirken. Diese Vermeidung von quergerichteten Strömungen und Wirbeln ist die Ursache dafür, daß die Sedimentation des Schlammes in dem Sedimentationsbecken 1 vergleichsweise effektiver und gezielter ablaufen kann, womit sich nicht nur an Baulänge des Sedimentationsbeckens 1, sondern vor allem an Bauhöhe und -tiefe einsparen läßt. Im oberen Bereich, also im Bereich des oberen Trums 15, bewegt sich die Räumeinrichtung zwar in Richtung des Pfeils 16 und damit entgegengerichtet zu der Durchströmrichtung 9. In diesem Bereich liegt jedoch in der Regel bereits vollständig Klarwasser vor , so daß sich hier auftretende Geschwindigkeitsgradienten nur begrenzt nachteilig auswirken können. Der obere Trum 15 des Bandräumers 11 ist hier so unterhalb des Wasserspiegels 17 angebracht, daß die Räumschilde 13 auch zur Schwimmschlammräumung genutzt werden können. Die Abfuhr des Schwimmschlammes ist hier aus Gründen der Übersichtlichkeit nicht dargestellt.

Bei der Bewegung des Bandräumers 11 bzw. der Räumeinrichtung 10 laufen die Räumschilde 13 an der Sohle 2 des Beckens entlang und fördern den sedimentierten Schlamm in Richtung auf die Stirnwand 6, in deren Bereich eine Abzugseinrichtung 18 für Schlamm vorgesehen ist. Die Abzugseinrichtung 18 weist als wesentliche Elemente Saugdüsen 19 und eine Pumpe 20 auf. Sie kann auch als Saugheber 19, 20 ausgebildet sein. Es versteht sich, daß sich auch die Saugdüsen 19 über die Breite des Sedimentationsbeckens 1 erstreckt, damit auch der von der Räumeinrichtung 10 herangeförderte Schlamm im unteren Bereich der Stirnwand 6 kontinuierlich und mit einer die Strömung nicht beeinträchtigenden Geschwindigkeit abgezogen wird. Obwohl es an sich möglich ist, die Abzugseinrichtung 18 intervallgesteuert anzutreiben, wird einem kontinuierlichen Antrieb der Vorzug gegeben, um auch insoweit quasi stationäre Verhältnisse an der unteren Kante im Bereich der Stirnwand 6 zu erzielen.

Schließlich ist noch ein Ablauf 21 für Klarwasser vorgesehen. Es können hier ein oder mehrere Tauchrohre 22 längs und/oder quer vorgesehen sein, die ebenfalls über die Länge und/oder Breite des Sedimentationsbeckens 1 reichen und über die das Klarwasser abgezogen oder abgeführt wird. Die Anordnungsstelle für diese Tauchrohre 22 ist nicht kritisch. Die Tauchrohre 22 könnten auch an anderer Stelle der Länge des Sedimentationsbeckens 1, als dargestellt, vorgesehen sein.

Die Ausführungsform des Sedimentationsbeckens 1 gemäß Fig. 2 gleicht in weiteren Bereichen der Ausführungsform gemäß Fig. 1. Lediglich der Zulauf 7 ist hier vergleichsweise noch tiefer in Höhe der zu erwartenden Räumzone angeordnet. In dieser Räumzone befindet sich bereits Schlamm, jedoch hier in bereits aufkonzentrierter Form. Die Räumschilde 13 erstrecken sich in einer Höhe, die zwischen 5 und 20 cm betragen kann. Die beiden oberen Umlenkrollen 12 sind hier oberhalb des Wasserspiegels 17 angeordnet, so daß eine gegenläufige Bewegung des oberen Trums 15 - entgegengesetzt zur Durchströmrichtung 9 - im Sedimentationsbecken 1 bzw. unterhalb des Wasserstandes 17 vermieden wird. Statt des mit Löchern versehenen Rohres der Saugdüsen 19 sind hier ein Saugdüsen 23 im unteren Eckbereich der Stirnwand 6 vorgesehen, die ebenfalls über die Breite des Sedimentationsbeckens 1 reichen. Als Ablauf 21 für Klarwasser sind hier Überlaufrinnen 24 angedeutet, die entlang der Längswände 3 und 4 des Sedimentationsbeckens 1 vorgesehen sind. Auch die Überlaufrinnen 24 können längs und/oder quer angeordnet sein. Auch hierbei wird wiederum die Räumeinrichtung 10 mit einer Geschwindigkeit gemäß Pfeil 14 angetrieben, der die Geschwindigkeit des Gemisches aus Schlamm und Abwasser unmittelbar oberhalb des unteren Trums der Räumeinrichtung 10 in Durchströmrichtung 9 entspricht. Da an dieser Stelle Relativgeschwindigkeiten vermieden werden, ist auch die Ursache für entsprechende hydraulische Störungen an dieser Stelle beseitigt.

In weiteren nicht dargestellten Ausführungsbeispielen wird trotz einer Relativgeschwindigkeit noch im Sinne der Erfindung eine nennenswerte Steigerung der Absetzleistung bewirkt. D.h. eine Leistungssteigerung ist noch zu verzeichnen, wenn die Wassergeschwindigkeit an der Einleitungsstelle über der Schlammschicht zwischen dem O,5fachen bis 2 fachen der Räumergeschwindigkeit beträgt. Der Einleitungsbereich ist der Anfangsbereich des Beckens. Bei einem 1Om langen Becken umfaßt der Anfangsbereich 1 bis 2 m, nämlich 10% bis 20% der Beckenlänge.

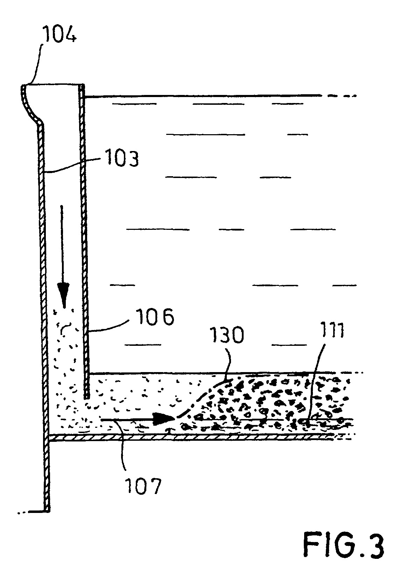

Nach Fig. 3 erfolgt der Zulauf über einen sich über die gesamte Beckenbreite erstreckenden Kanal, der etwas oberhalb des Beckenbodens endet. Die hierdurch entstehende Spalthöhe ist so gewählt, daß die Durchtrittströmungsgeschwindigkeit bei 5 bis 10 cm/s liegt.

Im Anschluß an die Durchtrittsströmung bildet sich eine Trennzone. Die Grenzschicht 130 der Trennzone ist strichpunktiert eingezeichnet und zeigt einen S-förmigen Verlauf. Die Trennzone findet sich innerhalb der Grenzschicht 130. Unterhalb der Trennzone befindet sich die Eindick- und Räumschicht 111.
Im vorderen Teil der Trennzone besteht eine turbulente Strömung. Durch die turbulente Strömung vereinigen sich die Mikroflocken zu Makroflocken mit trägerem Bewegungsverhalten. Die Makroflocken wandern in die Eindick- und Räumschicht 111. Das Wasser steigt nach oben. Der Schlamm der Eindick- und Räumschicht wird in der zu Fig. 1 und 2 erläuterten Weise mittels Bandräumer geräumt.

Die Trennzone erstreckt sich in Beckenlängsrichtung bis 3m, im Ausführungsbeispiel 1,5m.

Im Ausführungsbeispiel ist die Beckentiefe gegenüber einem herkömmlichen Becken gleicher Leistung etwa ein Drittel geringer, in anderen Ausführungsbeispielen mindestens 20%.

### BEZUGSZEICHENLISTE

- 1-: Sedimentationsbecken
- 2-: Sohle
- 3-: Längswand
- 4-: Längswand
- 5-: Stirnwand
- 6-: Stimwand
- 7-: Zulauf
- 8- 9-: Durchströmrichtung
- 10-: Räumeinrichtung
- 11-: Bandräumer
- 12-: Umlenkrolle
- 13-: Räumschild
- 14-: Pfeil
- 15-: Trum
- 16-: Pfeil
- 17-: Wasserspiegel
- 18-: Abzugseinrichtung
- 19-: Saugdüsen
- 20-: Pumpe
- 21-: Ablauf
- 22-: Tauchrohr
- 23 -: Saugkasten
- 24-: Überlaufrinne
- 103-: Rohrleitung
- 104 -: Überlauf
- 106-: Beckenwand
- 107 -: Durchtrittsströmung
- 111-: Eindick- und Räumschicht
- 130-: Grenzschicht

## Patentansprüche

1. Verfahren zum Betrieb eines Sedimentationsbeckens (1), insbesondere für Klärwerke, mit rechteckigem Grundriß zum Abscheiden von Schlamm aus Abwasser, mit einem Zulauf (7) für das Gemisch aus Schlamm und Abwasser in das Becken (1), einer an der Sohle (2) des Beckens (1) entlang streichenden Räumeinrichtung (10) für den abgesetzten Schlamm, einer Abzugseinrichtung (18) für den Schlamm und einem Ablauf (21) für das Klarwasser, wobei die Abzugseinrichtung (18) für den Schlamm an der dem Zulauf (7) gegenüberliegenden Seite des Beckens (1) vorgesehen ist, und die Räumeinrichtung (10) so angetrieben ist, daß das Wasser über der Eindick- und Räumschicht die gleiche Strömungsrichtung wie die Räumeinrichtung aufweist, wobei
a) die Wassergeschwindigkeit mindestens gleich dem 0,5 fachen und höchstens dem 2fachen der Räumergeschwindigkeit ist, wobei der Meßbereich der Wassergeschwindigkeit unmittelbar über der Eindick- und Räumschicht im Bereich des Beckenanfangs liegt und der Beckenanfang sich nach dem Zulauf über eine Länge erstreckt, die bis maximal 20% der Beckenlänge ist und
b) der Zulauf für das Abwasser in Höhe der Eindick- und Räumschicht (111) mündet und die Eintrittsgeschwindigkeit im Abwasser Zulauf bis zu 20 cm pro Sekunde ist, so daß sich am Beckenanfang die eintretenden Flocken in einer Trennzone zu Makroflocken agglomerieren.

2. Verfahren nach Anspruch 1, **gekennzeichnet durch** Verwendung eines Beckens, dessen Beckenanfang maximal gleich 10% der Beckenlänge ist.

3. Verfahren nach Anspruch 1, **gekennzeichnet durch** Verwendung eines Beckens, dessen Zulauf an der Beckensohle mündet.

4. Verfahren nach einem der Ansprüche 1 bis 3, **gekennzeichnet durch** Verwendung eines Beckens, dessen Zulauf sich als Spalt und/oder Schlitze über die Beckenbreite erstreckt.

5. Verfahren nach Anspruch 4, **gekennzeichnet durch** Verwendung eines Beckens mit ungleichförmig oder gleichförmig verteilten Spalten oder Schlitzen als Zulauf.

6. Verfahren nach einem der Ansprüche 1 bis 5, **gekennzeichnet durch** eine Abwasserströmung im Zulauf von 5 bis 10 cm pro Sekunde.

7. Verfahren nach einem der Ansprüche 1 bis 6, **gekennzeichnet durch** Verwendung eines Beckens dessen Trennzone sich in Längsrichtung des Beckens bis 3 m erstreckt.

8. Verfahren nach einem der Ansprüche 1 bis 7, **gekennzeichnet durch** Verwendung eines Beckens, dessen Tiefe gegenüber Becken mit gleicher Leistung um mindestens 20% verringert ist.

9. Verfahren nach einem der Ansprüche 1 bis 8, **gekennzeichnet durch** Verwendung eines Beckens mit einer Beckensohle, die geneigt oder mit Steigung verläuft.

10. Verfahren nach einem der Ansprüche 4 bis 9, **gekennzeichnet durch** Verwendung eines Beckens mit einem Zulauf mit einer Spalthöhe bis 50 cm.

11. Verfahren nach Anspruch 10, **gekennzeichnet durch** Verwendung eines Beckens mit einem Zulauf mit einer Spalthöhe bis 20 cm.

## Claims

1. Process for the operation of a sedimentation basin (1), especially for sewage works, having a rectangular ground plan for the separation of sludge from waste water, with an inlet (7) for the mixture of sludge and waste water into the basin (1), a sweeping device (10) for the separated sludge stroking along on the floor (2) of the basin (1), an extraction device (18) for the sludge and an outlet (21) for the waste water, wherein the extraction device (18) for the sludge is provided on the side of the basin (1) opposite to the inlet (7), and the sweeping device (10) is so driven that the water has the same flow-direction through the compact- and extraction layer as the sweeping device, while
(a) the water volocity is at least equal to 0.5 times and at most 2-times the sweeping velocity, wherein the measurement region for the water velocity lies directly over the compact- and extraction layer in the region of the basin entrance and the basin entrance extends after the inlet over a length, which is up to at most 20% of the basin length,
b) the inlet for the sewage flows in at the level of the compact and extraction layer (111) and the entry velocity in the sewage input is up to 20 cm per second, so that flocculates as they enter agglomerate into macroflocculates in a separation zone.

2. Process according to claim 1, **characterized by** the use of a basin whose basin entrance is at most equal to 10% of the basin length.

3. Process according to claim 1, **characterized by** the use of a basin the input of which feeds onto the basin floor.

4. Process according to any of claims 1 to 3, **characterised by** the use of a basin the inlet of which extends as gap and/or slit across the width of the basin.

5. Procoss according to claim 4, **characterized by** the use of a basin with differently or similarly-formed individual gaps or slits as inlet.

6. Process according to any of claims 1 to 5, **characterized by** a waste water flow in the range of 5 to 10 cm per second.

7. Process according to any of claims 1 to 6, **characterized by** the use of a basin whose separation zone extends up to 3 m in the longitudinal direction of the basin.

8. Process according to any of claims 1 to 7, **characterized by** the use of a basin whose depth is reduced by at least 20% as compared with basins with the same output.

9. Process according to any of claims 1 to 8, **characterized by** the use of a basin with a basin floor which is inclined or has a gradient.

10. Process according to any of claims 4 to 9, **characterized by** the use of a basin with an inlet having a gap height of up to 50 cm.

11. Process according to claim 10, **characterized by** the use of a basin with an inlet having a gap height of up to 20 cm

## Revendications

1. Procédé pour exploiter un bassin de sédimentation (1), en particulier pour des travaux de décantation, de forme rectangulaire pour la séparation de la boue contenue dans des eaux usées, comprenant une admission (7) pour le mélange de boue et d'eaux usées dans le bassin de décantation (1), un dispositif de curage (10) pour la boue déposée entraîné de manière à racler le radier (2) du bassin de décantation (1), un dispositif de soutirage (18) pour la boue et une décharge (21) pour l'eau claire, le dispositif de soutirage (18) pour la boue étant prévu sur le côté du bassin de décantation (1) opposé à l'admission (7), et le dispositif de curage (10) étant entraîné de manière à ce que l'eau présente au-dessus de la couche d'épaississement et de curage le même sens d'écoulement que le dispositif de curage, dans lequel
a) la vitesse de l'eau est au moins égale à 0,5 fois et au plus à 2 fois la vitesse de curage, la région de mesure de la vitesse de l'eau se trouvant immédiatement au-dessus de la couche d'épaississement et de curage dans la région du début du bassin et le début du bassin s'étendant après l'admission sur une longueur qui représente au maximum 20 % de la longueur du bassin,
b) l'admission pour les eaux usées débouche à hauteur de la couche d'épaississement et de curage (111) et la vitesse d'entrée au niveau de l'admission des eaux usées peut aller jusqu'à 20 cm par seconde de telle sorte qu'au début du bassin, les flocons entrant dans une zone de séparation s'agglomèrent en macroflocons.

2. Procédé selon la revendication 1, **caractérisé par** l'utilisation d'un bassin dont le début est égal au maximum à 10 % de la longueur du bassin.

3. Procédé selon la revendication 1, **caractérisé par** l'utilisation d'un bassin dont l'admission débouche au niveau du radier du bassin.

4. Procédé selon une des revendications 1 à 3,
**caractérisé par** l'utilisation d'un bassin dont l'admission s'étend comme une fente et / ou des fissures sur la largeur du bassin.

5. Procédé selon la revendication 4, **caractérisé par** l'utilisation d'un bassin avec des fentes ou des fissures réparties de manière uniforme ou non uniforme comme admission.

6. Procédé selon une des revendications 1 à 5, **caractérisé par** un courant des eaux usées au niveau de l'admission de 5 à 10 cm par seconde.

7. Procédé selon une des revendications 1 à 6, **caractérisé par** l'utilisation d'un bassin dont la zone de séparation s'étend dans le sens longitudinal du bassin jusqu'à 3 m.

8. Procédé selon une des revendications 1 à 7, **caractérisé par** l'utilisation d'un bassin dont la profondeur par rapport à des bassins de même rendement est réduite d'au moins 20 %.

9. Procédé selon une des revendications 1 à 8, **caractérisé par** l'utilisation d'un bassin avec un radier de bassin qui s'étend de manière déclive ou avec une montée.

10. Procédé selon une des revendications 4 à 9, **caractérisé par** l'utilisation d'un bassin avec une admission ayant une hauteur de fente allant jusqu'à 50 cm.

11. Procédé selon la revendication 10, **caractérisé par** l'utilisation d'un bassin avec une admission ayant une hauteur de fente allant jusqu'à 20 cm.
